# NEUE EUROPÄISCHE PATENTSCHRIFT

(11) **EP 0 646 080 B2**
(45) Veröffentlichungstag und Bekanntmachung des Hinweises auf die Entscheidung über den Einspruch: **04.11.1998**
(45) Hinweis auf die Patenterteilung: 10.01.1996
(21) Anmeldenummer: 93914680.9
(22) Anmeldetag: 21.06.1993
(51) Int. Cl.: B62D 5/083

(54) **DREHSCHIEBERVENTIL, INSBESONDERE FÜR HILFSKRAFTLENKUNGEN**
ROTARY SLIDE VALVE FOR ASSISTED STEERING SYSTEMS
VANNE A TIROIR ROTATIF, NOTAMMENT POUR DIRECTIONS ASSISTEES

(30) Priorität: 24.06.1992 DE 4220624
(43) Veröffentlichungstag der Anmeldung: 05.04.1995
(73) Patentinhaber: ZF FRIEDRICHSHAFEN AG, 88038 Friedrichshafen (DE)
(72) Erfinder: BAREIS, Helmut, D-7071 Eschach (DE); RUF, Gerhard, D-7088 Hüttlingen (DE)
(86) Internationale Anmeldenummer: EP9301570
(87) Internationale Veröffentlichungsnummer: WO9400329

(56) Entgegenhaltungen:
- EP-A- 414 448
- EP-A- 551 619
- EP-A- 0 468 659
- DE-C- 2 913 484
- GB-A- 2 212 463
- US-A- 4 173 987
- US-A- 4 632 204
- US-A- 4 819 545
- US-A- 5 046 573
- US-A- 5 046 574
- US-A- 5 070 958

## Beschreibung

Die Erfindung betrifft ein Drehschieberventil, insbesondere für Hilfskraftlenkungen, mit einer in einem Gehäuse gelagerten Ventilbuchse, die einen Drehschieber umschließt. Diese beiden Ventilbauteile sind zueinander verdrehbar angeordnet, dabei steht die Ventilbuchse mit einer Abtriebswelle und der Drehschieber mit einer ein Lenkhandrad tragenden Lenkspindel in Verbindung. Zwischen der Ventilbuchse und dem Drehschieber ist ein Drehstab eingesetzt. Weiterhin ist zwischen der Ventilbuchse und dem Drehschieber eine Zentriereinrichtung vorgesehen, die aus Schrägflächen mit dazwischenliegenden Zentrierkörpern und aus einer Feder besteht zur exakten Mitteneinstellung des Drehschieberventils. Die auf die Zentrierkörper einwirkende Kraft der Feder läßt sich überlagern durch eine in einer Rückwirkungskammer wirkende, veränderliche Druckkraft. Die Druckkraft kann man bei Hilfskraftlenkungen beispielsweise durch ein geschwindigkeitsabhängiges Signal verändern. Auf diese Weise wirkt am Lenkhandrad bei langsamer Fahrt eine geringe und bei schneller Fahrt eineverhältnismäßig hohe Rückwirkungskraft. Durch diese Maßnahme läßt sich besonders bei höheren Geschwindigkeiten ein guter Fahrbahnkontakt und somit ein gutes Lenkgefühl vermitteln.

Aus einem Prospekt der Firma TRW aus dem Jahre 1990 mit dem Titel "Rack and Pinon Steering", Seiten 10 und 11, ist es bereits bekannt, daß neben einem die Lenkspindel und eine Abtriebswelle verbindenden Drehstab noch eine Zentriereinrichtung Verwendung findet, die ein Drehschieberventil in die exakte Mittenlage zurückstellt. In einer derartigen Hilfskraftlenkung bildet der Drehschieber ein Bauteil der Lenkspindel und die Ventilbuchse ein Bauteil der Abtriebswelle. Die einander zugewandten Stirnseiten einer mit der Lenkspindel verbundenen, federbelasteten Reaktionsscheibe und der Ventilbuchse sind mit zueinander passenden Aussparungen, die Schrägflächen bilden, für die Aufnahme von Rastkugeln versehen. Die Lenkspindel mit der Reaktionsscheibe läßt sich relativ zur Ventilbuchse erst dann verdrehen, wenn das vom Fahrer am Lenkhandrad ausgeübte Drehmoment ausreicht, die Federvorspannung zu überwinden. Dann läßt sich das Drehschieberventil auslenken, um einen Druck im zugehörigen Stellmotor anzusteuern. Vor der Reaktionsscheibe auf der Seite der Rastkugeln befindet sich ein Druckraum mit einem Auslaßkanal, dessen Rücklaufquerschnitt steuerbar ist. Durch Regelung des Öldruckes ist es somit möglich, die am Lenkhandrad zur Aktivierung der Hilfskraft erforderliche Federvorspannung zu ändern. Die Regelung des Öldruckes hinter der Reaktionsscheibe erfolgt durch ein Magnetventil, welches über ein auf Geschwindigkeitssignale reagierendes elektronisches Steuergerät seine Befehle erhält. Damit zur Reduzierung der verhältnismäßig starken Federkraft eine ausreichend große hydraulische Druckkraft als Gegenkraft wirksam werden kann, muß man den Durchmessser der Reaktionsscheibe entsprechend großwählen. Dies bedeutet, daß das Ventilgehäuse im Bereich der Reaktionsscheibe und der Feder größer baut.

Der Erfindung liegt die Aufgabe zugrunde, eine möglichst gedrungene Bauweise für das Drehschieberventil zu finden, bei welchem die Zentriereinrichtung in radialer Richtung keinen zusätzlichen Bauraum beansprucht. Außerdem strebt man an, den die Rückwirkungskraft erzeugenden hydraulischen Druck zu verringern. Dabei soll ein nahezu reibungsfreies und somit präzises Ansprechen der Zentriereinrichtung erreicht werden.

Diese Aufgabe ist durch die Merkmale des Anspruchs 1 gelöst. Vorteilhafte Weiterbildungen ergeben sich aus den Ansprüchen 2 bis 5. Nach dem Hauptmerkmal der Erfindung baut man zwischen der Feder und den Wälzkörpern einen Rückwirkungskolben ein, wobei die Rückwirkungskammer zwischen dem Rückwirkungskolben und einem Deckel liegt. Der Rückwirkungskolben läßt sich im Ventilgehäuse und im Deckel leicht abdichten. In dieser Anordnung hat die Rückwirkungskammer gleichzeitig die Funktion des Federraumes, so daß die hydraulische Kraft die Federkraft unterstützt. Die Feder kann daher schwächer dimensioniert sein, wodurch diese auch einen kleineren Einbauraum beansprucht. Um die Reibung zwischen den einzelnen Teilen der Zentriereinrichtung zu verringern, wird die Feder über ein Nadellager am Rückwirkungskolben abgestützt. Dadurch ergibt sich ein nahezu reibungsfreies und präzises Ansprechen der Zentriereinrichtung.

Nach den Ansprüchen 2 wird der Rückwirkungskolben in einer Axialführung auf Kugeln verschieblich geführt. Dadurch wird das reibungsfreie und exakte Ansprechen der Zentriereinrichtung weiter verbessert.

Nach Anspruch 3 sind die mit dem Drehschieber zusammenwirkenden Schrägflächen in ein Zentrierstück eingearbeitet, das mit dem Rückwirkungskolben nach dem Ausrichten auf die hydraulische Mitte fest verbunden ist. Dies hat den Vorteil, daß nach dem Verstiften des Drehstabes mit dem Drehschieber in der hydraulischen Mitte sich auch die Schrägflächen der Zentriereinrichtung exakt zueinander auf die hydraulische Mitte einstellen lassen. Winkelfehler und andere Fertigungstoleranzen zwischen dem Drehschieberventil und der Zentriereinrichtung können daher zuverlässig vermieden werden.

Nach Anspruch 4 ist es zweckmäßig, das Zentrierstück durch Laserschweißen am Rückwirkungskolben zu befestigen. Mit dieser Verbindungstechnik bleiben die mechanischen Eigenschaften der verhältnismäßig kleinen Bauteile erhalten, d. h. es gibt keinen Wärmeverzug.

Nach Anspruch 5 steht die Rückwirkungskammer über eine Blende mit dem Ölrücklauf in Verbindung. Durch diese Maßnahme läßt sich ein gegenüber dem Pumpendruck abgesenkter Zwischendruck als Rückwirkungsdruck in der Rückwirkungskammer einstellen.

Die Erfindung ist an einem Ausführungsbeispiel anhand der Zeichnung näher erläutert.
Es zeigen:
- Fig. 1: einen vergrößerten Längsschnitt durch ein Drehschieberventil;
- Fig. 2: eine Teilansicht auf die Zentriereinrichtung in Richtung des Pfeiles II der Fig. 3 bei weggelassenem Kugelkäfig und
- Fig. 3: die Einzelheit III der Fig. 1 in gegenüber Fig. 1 vergrößerter Darstellung.

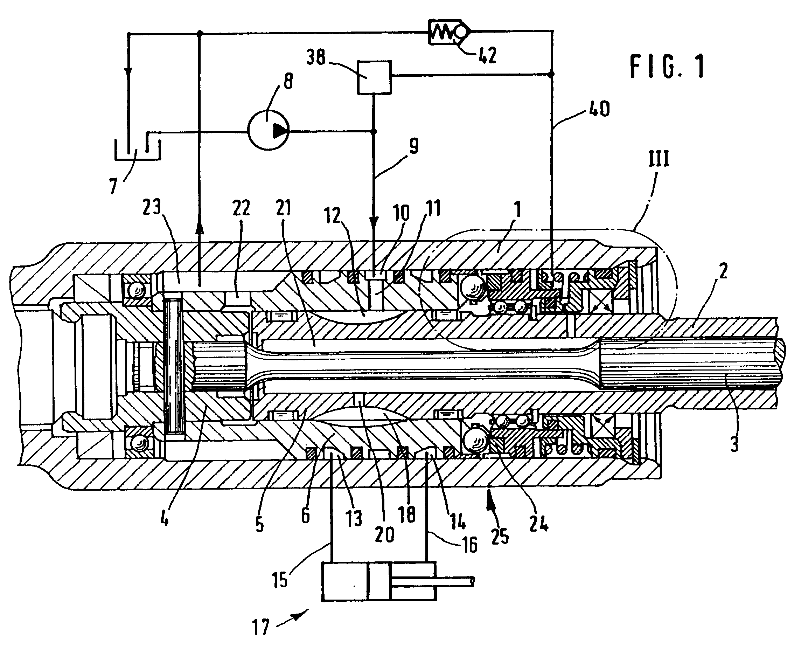

Im Längsschnitt nach Fig. 1 steht eine in einem Ventilgehäuse 1 gelagerte Lenkspindel 2 über einen Drehstab 3 mit einer Abtriebswelle 4 in Verbindung, die z. B. ein Ritzel eines Zahnstangenlenkgetriebes tragt. Ein unterer Abschnitt der Lenkspindel 2 ist als Drehschieber 5 ausgeführt, der sich in eine mit der Abtriebswelle 4 verbundene Ventilbuchse 6 erstreckt. Der Drehschieber 5 und die Ventilbuchse 6 bilden in bekannter Weise ein Drehschieberventil mit zusammenwirkenden Steuernuten und zugehörigen Bohrungen. Zwischen der Lenkspindel 2 und der Abtriebswelle 4 sind nicht sichtbare Anschläge vorgesehen, die ein begrenztes Verdrehspiel zum Aussteuern des Drehschieberventils 5, 6 zulassen.

Eine an einen Tank 7 angeschlossene Hochdruckpumpe 8 steht über eine Druckleitung 9 und eine Ringnut 10 mit Bohrungen 11 der Ventilbuchse 6 in Verbindung.

Die Bohrungen 11 münden in axiale Zulaufnuten 12 des Drehschiebers 5. Beim Verdrehen des Drehschieberventils 5, 6 können die Zulaufnuten 12 mit nicht sichtbaren axialen Zylindernuten der Ventilbuchse 6 in Verbindung treten, die an Ringnuten 13 und 14 anschließen. Diese Ringnuten 13 und 14 führen über Druckleitungen 15 und 16 in Druckräume eines Stellmotors 17. Schließlich befinden sich im Drehschieber 6 noch axiale Rücklaufnuten 18, die über Bohrungen 20 in einen Innenraum 21 münden. Der Innenraum 21 schließt über eine Bohrung 22 der Ventilbuchse 6 und eine Kammer 23 an den Tank 7 an.

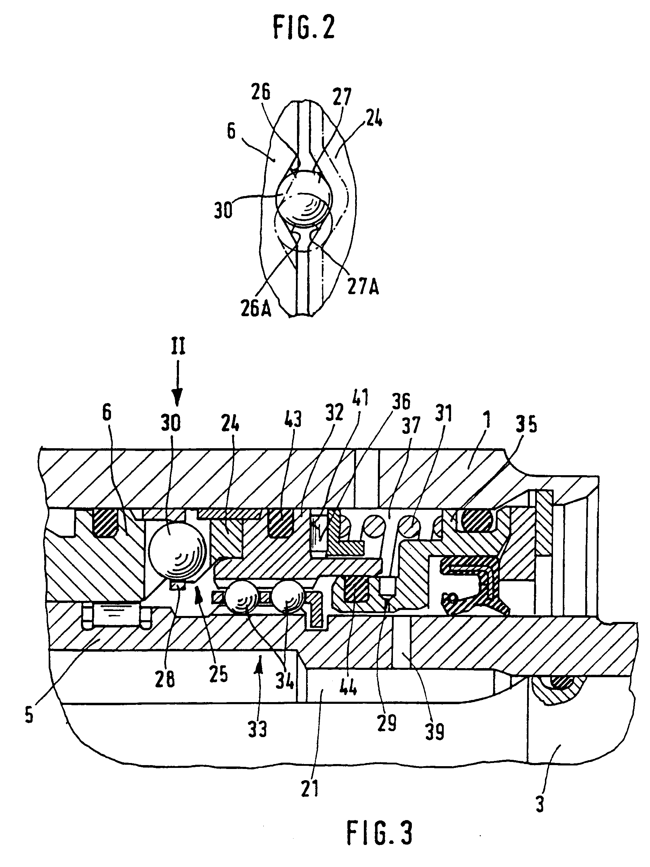

Zwischen der Ventilbuchse 6 und einem mit der Lenkspindel 2 festen Zentrierstück 24 ist eine Zentriereinrichtung 25 vorgesehen. Die Zentriereinrichtung 25 (Fig. 2) besteht aus Schrägflächen 26 und 26A in einer Stirnseite der Ventilbuchse 6 und entsprechend ausgeführten Schrägflächen 27 und 27A im Zentrierstück 24, wobei zwischen diesen Schrägflächen in einem Käfig 28 gehaltene Wälzkörper 30 eingespannt sind.

Die Fig. 2 zeigt die Zentriereinrichtung 25 bei weggelassenem Käfig 28 in der Mittenstellung (Neutralstellung) und in einer gestrichelt gezeichneten Betriebsstellung (Anregelstellung).

Wie am besten aus Fig. 3 zu ersehen ist, setzt man nach der Erfindung zwischen eine Feder 31 und die Zentriereinrichtung 25 einen Rückwirkungskolben 32 ein, der über eine Axialführung 33 drehfest auf der Lenkspindel 2 gehalten ist. Zur Verringerung der Axialreibung stützt sich der Rückwirkungskolben 32 in der Axialführung 33 auf Kugeln 34 ab. Das Zentrierstück 24 ist vorteilhaft durch Laserschweißen mit dem Rückwirkungskolben 32 verbunden. Die Feder 31 stützt sich einerseits an einem im Ventilgehäuse 1 festen, als Dichtungsträger ausgebildeten Deckel 35 ab, und andererseits über ein Nadellager 36 am Rückwirkungskolben 32. Zwischen dem Rückwirkungskolben 32 und dem Deckel 35 liegt eine Rückwirkungskammer 37, die zugleich Federraum ist. In dem Deckel 35 befindet sich eine Blende 29, die die Rückwirkungskammer 37 über eine Bohrung 39 der Lenkspindel 2 mit dem Innenraum 21 und damit auch mit dem Tank 7 verbindet. Die Rückwirkungskammer 37 ist durch eine Dichtanordnung 43 im Kolben 32 und eine weitere Dichtanordnung 44 im Deckel 35 abgedichtet.

Die in Fig. 1 gezeichnete Druckleitung 9 steht außer mit der Ringnut 10 über ein Elektromagnetventil 38 und eine Leitung 40 mit der Rückwirkungskammer 37 in Verbindung. Bei niedriger Fahrgeschwindigkeit ist das Magnetventil 38 geschlossen. Bei einer Relativverdrehung des Drehschiebers 5 gegenüber der Ventilbuchse 6 muß zum Ansteuern des Stellmotors 17 lediglich der Drehstab 3 verdreht werden, wozu die Axialkraft kommt, die von den auf den Schrägflächen 26, 26A und 27, 27A auflaufenden Wälzkörpern 30 (Fig. 2, gestrichelte Linie) erzeugt wird. Durch diese Axialkraft verschiebt sich der Rückwirkungskolben 32 um einen geringen Betrag gegen die Feder 31. Diese Axialkraft ist noch verhältnismäßig klein, da ja beispielsweise beim Einparken ein Ansprechen des Drehschieberventils 5, 6 mit einer geringen Verdrehkraft am Lenkhandrad möglich sein soll.

Fährt man mit höherer Geschwindigkeit, dann öffnet das Magnetventil und es fließt über die Leitung 40 ein geschwindigkeitsabhängiger Ölstrom zur Rückwirkungskammer 37. Der durch die Blende 29 erzeugte Staudruck wirkt dabei als Rückwirkungsdruck auf eine Stirnfläche 41 des Rückwirkungskolbens 32. Dieser Rückwirkungsdruck addiert sich zur Kraft der Feder 31 hinzu. Um die Zentriereinrichtung 25 zu überwinden und das Drehschieberventil 5, 6 auszusteuern, benötigt der Fahrer jetzt mehr Handkraft. Diese von der Fahrgeschwindigkeit abhängige, zusätzlich zu überwindende Verdrehkraft vermittelt bei schneller Fahrt das sogenannte Lenkgefühl. Die Hilfskraftlenkung wird sozusagen steifer.

Zur Begrenzung des Rückwirkungsdruckes ab einer bestimmten Geschwindigkeit kann man ein Abschneidventil 42 vorsehen (Fig. 1).

### Bezugszeichen

- 1: Ventilgehäuse
- 2: Lenkspindel
- 3: Drehstab
- 4: Abtriebswelle
- 5: Drehschieber
- 6: Ventilbuchse
- 7: Tank
- 8: Hochdruckpumpe
- 9: Druckleitung
- 10: Ringnut
- 11: Bohrung
- 12: Zulaufnuten
- 13: Ringnut
- 14: Ringnut
- 15: Druckleitung
- 16: Druckleitung
- 17: Stellmotor
- 18: Rücklaufnuten
- 19: -
- 20: Bohrungen
- 21: Innenraum
- 22: Bohrung
- 23: Kammer
- 24: Zentrierstück
- 25: Zentriereinrichtung
- 26, 26A: Schrägflächen
- 27, 27A: Schrägflächen
- 28: Käfig
- 29: Blende
- 30: Wälzkörper
- 31: Feder
- 32: Rückwirkungskolben
- 33: Axialführung
- 34: Kugeln
- 35: Deckel
- 36: Nadellager
- 37: Rückwirkungskammer
- 38: Magnetventil
- 39: Bohrung
- 40: Leitung
- 41: Stirnfläche von 32
- 42: Abschneidventil
- 43: Dichtanordnung
- 44: Dichtanordnung

## Patentansprüche

1. Drehschieberventil, insbesondere für hydraulische Hilfskraftlenkungen, mit folgenden Merkmalen:
- eine in einem Gehäuse gelagerte Ventilbuchse (6) umschließt einen Drehschieber (5);
- die Ventilbuchse (6) steht mit einer Abtriebswelle (4) und der Drehschieber (5) mit einer ein Lenkhandrad tragenden Lenkspindel (2) in Verbindung;
- zwischen der Ventilbuchse (6) und dem Drehschieber (5) ist ein Drehstab (3) eingesetzt;
- zwischen der Ventilbuchse (6) und dem Drehschieber (5) ist eine Wälzeinrichtung (25) vorgesehen, die aus Schrägflächen (26, 26A; 27, 27A) mit dazwischenliegenden Wälzkörpern (30) und einer Feder (31) besteht zur exakten Mitteneinstellung des Drehschieberventils (5, 6);
- die auf die Wälzkörper (30) einwirkende Kraft der Feder (31) läßt sich überlagern durch eine in einer Rückwirkungskammer (37) wirkende veränderliche Druckkraft,
- zwischen der Feder (31) und den Wälzkörpern (30) ist ein Rückwirkungskolben (32) eingebaut;
**gekennzeichnet** durch folgende Merkmale:
- die Rückwirkungskammer (37) liegt zwischen dem Rückwirkungskolben (32) und einem Deckel (35), wobei die Rückwirkungskammer (37) zugleich die Feder (31) aufnimmt und
- die Feder (31) stützt sich über ein Nadellager (36) am Rückwirkungskolben (32) ab.

2. Drehschieberventil nach Anspruch 1, dadurch **gekennzeichnet,** daß der Rückwirkungskolben (32) in einer Axialführung (33) auf Kugeln (34) verschiebbar ist.

3. Drehschieberventil nach Anspruch 1, dadurch **gekennzeichnet,** daß die mit dem Drehschieber (5) zusammenwirkenden Schrägflächen (27, 27A) in ein Zentrierstück (24) eingearbeitet sind, das mit dem Rückwirkungskolben (32) nach dem Ausrichten auf die hydraulische Mitte fest verbunden ist.

4. Drehschieberventil nach Anspruch 3, dadurch **gekennzeichnet,** daß das Zentrierstück (24) durch Laserschweißen am Rückwirkungskolben (32) befestigt ist.

5. Drehschieberventil nach Anspruch 1, dadurch **gekennzeichnet,** daß die Rückwirkungskammer (37) über eine Blende (29) mit dem Rücklauf verbunden ist.

## Claims

1. A rotary slide vlave, more particularly for hydraulic power-assisted steering systems, and having the following features:
- A valve sleeve (6) mounted in a casing surrounds a rotary valve (5);
- The valve sleeve (6) is connected to a driving shaft (4) and to the rotary valve (5) via a steering-wheel shaft (2) bearing a steering-wheel;
- A torsion bar (3) is inserted between the valve sleeve (6) and the rotary valve (5);
- A rolling means (25) is provided between the valve sleeve (6) and the rotary valve (5) and comprises sloping surfaces (26, 26A; 27, 27A) with interposed rolling members (30) and a spring (31) for exact central adjustment of the rotary slide valve (5, 6) and
- the force of the spring (31) acting on the rolling members (30) can be overlaid by a variable compressive force acting in a reaction chamber (38);
- a reaction piston (32) is intalled between the spring (31) and the rolling members (30),
**characterised** by the following features:
- the reaction chamber (37) lies between the reaction piston (32) and a cover (35), and the reaction chamber (37) also receives the spring (31) and
- the spring (31) abuts the reaction piston (32) via a needle bearing (32).

2. A rotary slide valve according to claim 1, **characterised** in that the reaction piston (32) is movable on balls (34) in an axial guide (33).

3. A rotary slide valve according to claim 1, **characterised** in that the sloping surfaces (27, 27A) co-operating with the rotary valve (5) are machined in a centring member (24) which is firmly connected to the reaction piston (32) after alignment with the hydraulic centre.

4. A rotary slide valve according to claim 1, **characterised** in that the centring member (24) is securEd to the reaction piston (32) by laser welding.

5. A rotarY slide valve according to claim 1, **characterised** in that the reaction chamber (37) is connected to the return flow via a diaphragm (29).

## Revendications

1. Vanne à tiroir rotatif, notamment pour direction assistée, présentant les caractères suivants:
- une douille de vanne (6) logée dans un boîter qui entoure un tiroir rotatif (5);
- la douille de vanne (6) est en liaison avec un arbre d'entraînement (4) et le tiroir rotatif (5) est en liaison avec la colonne de direction (2) portant un volant;
- une barre de torsion (3) est montée entre le douille de vanne (6) et le tiroir rotatif (5);
- un dispositif à roulement (25) est disposé entre la douille de vanne (6) et le tiroir rotatif (5), ce dispositif comportant des surfaces obliques (26, 26A; 27, 27A) et de rouleaux (30) disposés entre elles, ainsi qu'un ressort (31) pour assurer un positionnement central précis de la vanne à tiroir rotatif (5, 6);
- la force exercée par le ressort (31) sur les rouleaux (30) est superposée à une force de pression variable exercée dans une chambre de réaction (37);
- entre le ressort (31) et les rouleaux (30) est monté un piston de réaction (32),
**caractérisée** en ce que :
- en ce que le chambre de réaction (37) est disposée entre le piston de réaction (32) et un couvercle (35), le ressort (31) étant également logé dans la chambre de réaction (37) et
- en ce que le ressort (31) est en appui contre le piston de réaction (32) par l'intermédiaire d'un roulement à aiguilles (36).

2. Vanne à tiroir rotatif selon la revendication 1, **caractérisée** en ce que le piston de réaction (32) est monté sur des billes (34) et coulisse dans un guidage axial (33).

3. Vanne à tiroir rotatif selon la revendication 1, **caractérisée** en ce que les surfaces obliques (27, 27A) qui coopèrent avec le tiroir rotatif (5) sont montées dans une pièce de centrage (24) qui est couplée rigidement au piston de réaction (32) après son ajustage sur le point milieu hydraulique.

4. Vanne à tiroir rotatif selon la revendication 3, **caractérisée** en ce que la pièce de centrage (24) est fixée par soudure au laser au piston de réaction (32).

5. Vanne à tiroir rotatif selon la revendication 1, **caractérisée** en ce que la chambre de réaction (37) est connectée au circuit de retour par l'intermédiaire d'un orifice calibré (29).
